# EUROPÄISCHE PATENTANMELDUNG

(11) **EP 0 622 646 A1**
(43) Veröffentlichungstag der Anmeldung: **02.11.1994**
(21) Anmeldenummer: 93106915.7
(22) Anmeldetag: 28.04.1993
(51) Int. Cl.: G02B 6/12, G02B 6/30

(54) **Optoelektronischer IC**

(71) Anmelder: SIEMENS AKTIENGESELLSCHAFT, D-80333 München (DE)
(72) Erfinder: Schimpe, Robert, Dr., W-8012 Ottobrunn (DE)

(57) **Zusammenfassung**

Optoelektronischer IC, vorzugsweise auf einem mit Nuten für die Fixierung von Glasfasern vorgesehenen Subträger, wobei der in dem IC verlaufende Wellenleiter mindestens einen nahezu um 180° verlaufenden Bogen aufweist, so daß die für Lichteintritt bzw. Lichtaustritt vorgesehenen Enden des Wellenleiters an dieselbe Lichtein-/austrittsfläche des IC's geführt sind.

## Beschreibung

Die vorliegende Erfindung betrifft einen optoelektronischen IC, insbesondere einen IC für einfache Chip-Faser-Kopplung in optischen Kontrollelementen.

In Übertragungsstrecken der optoelektronischen Nachrichtentechnik besteht die Aufgabe, optische Halbleiterbauelemente mit zwei Chip-Faser-Kopplungen, wie zum Beispiel optische Modulatoren, Schalter und Verstärker, an Glasfaserwellenleiter anzukoppeln. Insbesondere optische Verstärker benötigen Chip-Faser-Kopplungen, die reproduzierbar hohe Koppelwirkungsgrade gepaart mit geringster Rückreflexion aufweisen.

In der Veröffentlichung von R. Boudreau et. al. in Electronics Letters 27, 1845 - 1846 (1991) wird die beidseitige Ankopplung von Glasfasern an optische Verstärker beschrieben. Die Fasern müssen mit Toleranzen im Bereich unter 1 µm bezüglich der Verstärkerwellenleiter ausgerichtet werden. Insbesondere muß die Lage der zuerst justierten Faser auch beim Ausrichten der zweiten Faser aufrechterhalten werden.

In einem Beitrag zur 16. European Conference of Optical Communication 1990 (ECOC '90), Seite 247 - 250, von Y. Tamura et. al. wird ein Verstärkermodul beschrieben, das einen optischen Zirkulator enthält.

In der Veröffentlichung von I. Cha et. al. in Electronics Letters 25, Seiten 242 - 243 (1989) wird ein optischer Verstärker mit einer zur Entspiegelung vergrabenen Wellenleiterendfläche beschrieben.

In der Veröffentlichung von P. J. Duthie in Electronics Letters 27, S. 1747 - 1748 (1991) wird eine 4x4-Schaltmatrix mit Richtkopplern beschrieben, die über kreisförmige Bögen mit 15 bis 20 mm Radius verbunden sind.

In der Veröffentlichung von N. Bar-Chaim wird eine Aluminium- Gallium-Arsenid-Laserdiode mit Quantum-well-Struktur mit Halbringgeometrie beschrieben.

In der Veröffentlichung von T. L. Koch et. al. in Photon. Technol. Letters 2, S. 88 - 90 (1990) wird eine Laserdiode mit Mehrfach-quantum-well-Struktur im System Indium-Gallium-Arsenid/Indium-Gallium-Arsenid-Phosphid mit getapertem Wellenleiter beschrieben.

In der Veröffentlichung von J. B. D. Soole e. a.: "Monolithic InP-Based Grating Spectrometer For Wavelength-Division Multiplexed Systems At 1,5 µm" in Electronics Letters 27, 132 bis 134 (1991) ist ein Wellenlängen-Demultiplexer auf einem InP-Chip beschrieben. Bei diesem Demultiplexer sind mehrere Stegwellenleiter parallel zueinander angeordnet, von denen jeweils ein Ende an derselben Lichtein-/austrittsfläche mündet. Das jeweils andere Ende ist auf ein Beugungsgitter gerichtet, das die auftreffende Strahlung in jeweils einen Wellenleiter rückreflektiert.

Aufgabe der vorliegenden Erfindung es ist, einen optoelektronischen IC, insbesondere zur Kopplung mit Glasfasern, anzugeben, bei dem die Ankopplung und Justage von mindestens zwei Glasfasern einfach realisierbar ist.

Diese Aufgabe wird mit dem optoelektronischen IC mit den Merkmalen des Anspruches 1 gelöst. Weitere Ausgestaltungen ergeben sich aus den abhängigen Ansprüchen.

Bei dem erfindungsgemäßen IC ist ein Wellenleiter W vorhanden, dessen Enden zu derselben Lichtein-/austrittsfläche B führen.

Die für den Lichteintritt vorgesehene Seitenfläche des IC's ist daher auch für den Lichtaustritt zu verwenden und ist mit einer Entspiegelung, zum Beispiel einer Entspiegelungsschicht, versehen. Die Glasfasern, die an den IC angeschlossen werden sollen, können daher an derselben Seitenfläche des IC's angekoppelt werden. Wird der IC auf einem Subträger S montiert, so kann dieser Subträger S mit grabenartigen Einschnitten V zur Aufnahme und Fixierung von Glasfasern G versehen sein. Es ist daher eine einfache und leicht in großen Stückzahlen reproduzierbare Justierung der anzukoppelnden Glasfasern möglich.

Es folgt eine Beschreibung des erfindungsgemäßen IC's anhand der Figuren 1 bis 9.
- Figur 1: zeigt einen IC mit einem in zwei Bögen geführten Wellenleiter.
- Figur 2: zeigt einen IC mit einem in drei Bögen geführten und verzweigten Wellenleiter.
- Figur 3: zeigt in einem Diagramm mögliche Krümmungsradien für den Wellenleiterbogen in Abhängigkeit von der Dicke des Wellenleiters, dessen Breite und dem verwendeten Material.
- Figur 4: zeigt einen auf einem Subträger montierten IC mit angekoppelten Glasfasern in perspektivischer Ansicht.
- Figur 5: zeigt einen IC, der bis auf eine Kreuzung des Wellenleiters dem IC der Figur 2 entspricht.
- Figur 6: zeigt einen erfindungsgemäßen IC als 4 x 4-Schaltmatrix.
- Figur 7: zeigt einen IC mit zwei Umlenkspiegeln.
- Figur 8: zeigt einen IC entsprechend Fig. 1 mit einem im Abstand vor der Lichtein-/austrittsfläche endenden Wellenleiterabschnitt.
- Figur 9: zeigt einen IC entsprechend Fig. 2, bei dem alle Wellenleiterenden im Abstand zu der Lichtein-/austrittsfläche angeordnet sind.

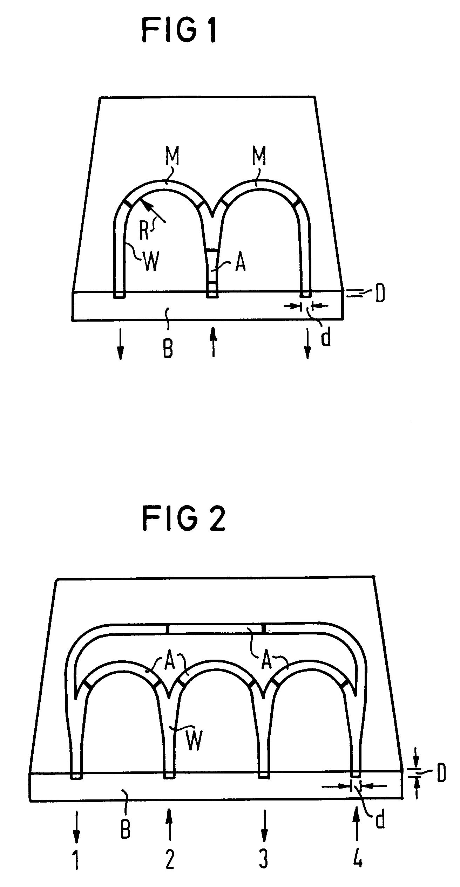

In Figur 1 ist in einer schrägen Aufsicht auf die Oberfläche von der Seite der Lichtein-/austrittsfläche B aus gesehen ein erfindungsgemäßer IC mit zweifach gekrümmtem Wellenleiter W dargestellt. In dem Wellenleiter W befinden sich Bereiche A, M, die für eine Versorgung mit Energie vorgesehen sind. Zu diesem Zweck befindet sich in diesen Bereichen ein pn-Übergang oder ein pin-Übergang in dem Wellenleiter. Die Energie kann in Form von optischer Energie zugeführt werden, was z. B. durch Beleuchten dieses Bereiches von oben oder durch das in dem Wellenleiter geführte Licht erfolgen kann. Statt dessen kann die Energie in Form von elektrischer Energie über auf diesen Bereichen angebrachte Kontakte zugeführt werden. In den Figuren sind diese Bereiche beispielhaft als Verstärker A und Modulatoren M dargestellt, wie das auch bei dem Wellenleiter der Figur 1 der Fall ist. In diesem Wellenleiter befinden sich ein Verstärker A und in beiden Bögen je ein Modulator M. Hier und im folgenden kann anstatt der Verstärker(schalter) jeweils ein Modulator oder ein Richtkoppler angeordnet sein. Das mittlere Ende des Wellenleiters ist für den Lichteintritt und die beiden an den Seiten befindlichen Enden für den Lichtaustritt vorgesehen (mit Pfeilen angedeutet). Der Radius R des Wellenleiterbogens ist ebenfalls eingezeichnet. In Figur 2 ist ein entsprechender Wellenleiter mit drei Bögen, und daher vier Wellenleiterenden, von denen zwei für den Lichteintritt und zwei für den Lichtaustritt vorgesehen sind, dargestellt. In dem Wellenleiter der Figur 2 befinden sich vier Verstärker A. Die Anordnung nach Figur 1 bildet eine 1 x 2-Matrix mit optischer Weiche in Form einer y-Gabel. Die Anordnung von Figur 2 bildet eine 2 x 2-Matrix, bei der ein kreuzungsfreier Aufbau der Matrix möglich ist. Zur Verbesserung der Kopplung zwischen den Glasfasern, die an den IC angeschlossen werden sollen, und dem IC kann ein Wellenleiter-taper wie in der Veröffentlichung von T. L. Koch et. al. beschrieben jeweils an den Einmündungen des Wellenleiters W in die Lichtein-/austrittsfläche B angeordnet werden. Der Wellenleiter kann auch jeweils wie in der Veröffentlichung von I. Cha et. al. beschrieben ein kurzes Stück vor der Lichtein-/austrittsfläche B des IC's enden, und die Endfläche kann mit einer dielektrischen Schicht entspiegelt sein.

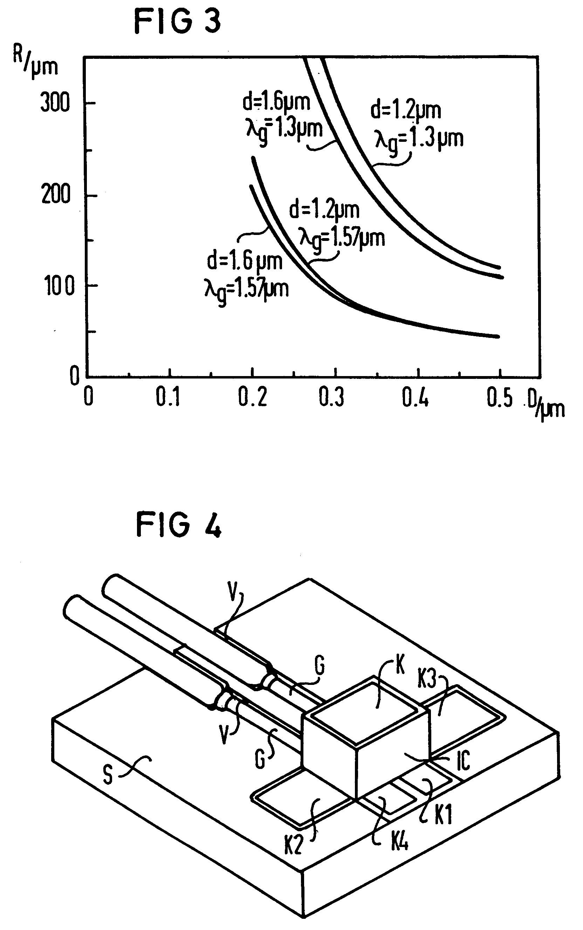

Die gekrümmten Bereiche (Bögen) des Wellenleiters W sind vorzugsweise als vergrabene Heterostruktur (BH) ausgeführt. Besonders geeignet zur Führung des Lichtes in gekrümmten Wellenleiterbereichen sind optische Modulatoren (wie in den Figuren gezeigt) oder elektrisch gepumpte optische Verstärker mit BH- Struktur, weil deren Wellenleiterkern einen besonders hohen Brechungsindex im Vergleich zum umgebenden Halbleitermaterial aufweist. Die hieraus resultierende relativ starke Wellenführung bewirkt besonders geringe Strahlungsverluste, die andernfalls wegen der Krümmung auftreten könnten. Figur 3 enthält ein Diagramm mit dem Ergebnis einer Berechnung des Radius R eines halbkreisförmigen Wellenleiterbogens in Abhängigkeit von der Dicke D dieses Wellenleiters, wobei für die Kurvenschar als Parameter die Breite d und die Materialzusammensetzung (Wellenlänge der Bandkante) gewählt wurden. Dabei wurde ein Wellenleiterkern aus Indium-Gallium-Arsenid-Phosphid, der in Indium-Phospid eingebettet ist, zugrundegelegt. Aus dem Diagramm ist zu erkennen, daß für maximal zugestandene Abstrahlverluste von 0,1 cm⁻¹ ein Radius R von weniger als 1 mm möglich ist. Statt der berechneten Indium-Gallium-Arsenid/Indium-Phosphid-BH-Struktur kann die erfindungsgemäße Anordnung auch Quantum-well-Schichten enthalten, einen Stegwellenleiter aufweisen oder Materialkomponenten aus Aluminium-Gallium-Arsenid, Inidum-Gallium-Arsenid oder Gallium-Arsenid enthalten.

Figur 4 zeigt schematisch eine perspektivische Aufsicht auf einen erfindungsgemäßen optoelektronischen IC mit einem Subträger S, auf dem mindestens zwei faserförmige Lichtwellenleiter (Glasfasern) montiert sind. Die elektrische Ansteuerung des IC's erfolgt über die Kontakte K, K1, K2, K3 und K4. Diese Kontakte sind z. B. mit den mit pn-Übergang oder pin-Übergang versehenen Bereichen des Wellenleiters (z. B. Verstärker A oder Modulator M) elektrisch leitend verbunden. Der Subträger S besteht beispielsweise aus Silizium und enthält zwei grabenartige Einschnitte V mit vorzugsweise V-förmigem Querschnitt zur Ausrichtung der Glasfasern G zueinander.

Das von der einen Glasfaser G in den Wellenleiter eingekoppelte Licht wird in einem Bogen durch den IC zu der anderen Glasfaser G geführt, wobei der Umlenkwinkel 180° beträgt. Der Vorteil der erfindungsgemäßen Anordnung liegt darin, daß sowohl der Abstand der beiden Enden des Wellenleiters W an der Lichtein-/austrittsfläche B des IC's als auch der Abstand der beiden Glasfasern G mit hoher Genauigkeit eingehalten werden können. Hierdurch wird die Zahl der Justierfehler zur Kopplung zwischen IC und Glasfaser bei der Herstellung deutlich reduziert. Der Aufwand zur Kopplung zwischen Eingangs- und Ausgangsglasfaser und dem IC wird daher bei dem erfindungsgemäßen IC wesentlich reduziert, da Eingangswellenleiter und Ausgangswellenleiter auf derselben Chipendfläche liegen. Das gilt insbesondere, wenn mehr als zwei Glasfasern angeschlossen werden sollen. Ein weiterer Vorteil der erfindungsgemäßen Anordnung liegt darin, daß der Flächenbedarf des IC's reduziert wird durch besonders niedrige Krümmungsradien für die Wellenleiter, die durch die starke Wellenführung in vergrabenen Hydrostrukturen ermöglicht werden.

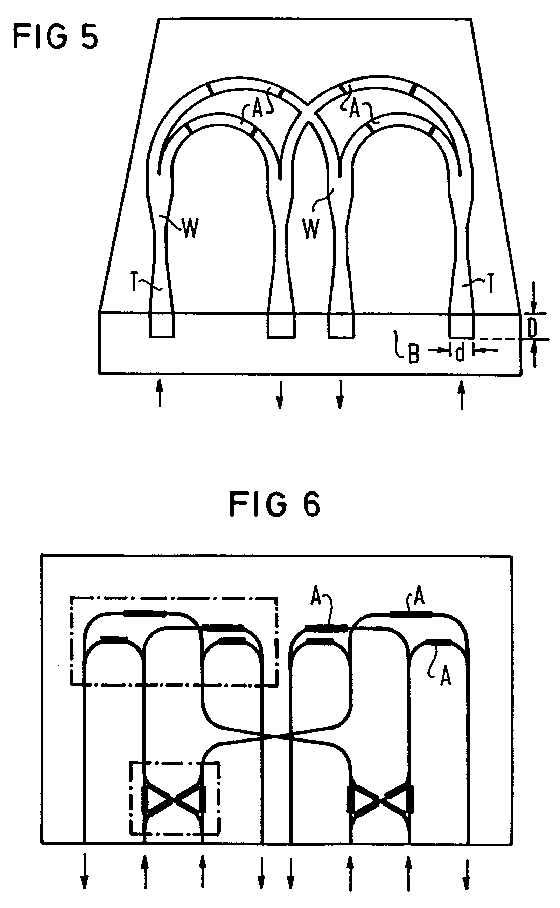

Figur 5 zeigt einen erfindungsgemäßen IC entsprechend der Anordnung von Figur 2, bei der der Wellenleiter allerdings einen Kreuzungspunkt aufweist. Diese Anordnung einer 2 x 2-Schaltmatrix hat gegenüber der Anordnung der Figur 2 den Vorteil, daß die Wellenleiterenden die an der Lichtein-/austrittsfläche münden näher beieinander liegen und damit die Breite des IC's geringer gehalten werden kann. Die Enden des Wellenleiters W sind in diesem Ausführungsbeispiel der Figur 5 durch zweidimensionale Taper T gebildet. Damit wird der im Vergleich zu dem im IC verlaufenden Wellenleiter größere Querschnitt der anzukoppelnden Glasfasern an diesen geringeren Querschnitt des Wellenleiters angepaßt.

Figur 6 zeigt einen erfindungsgemäßen IC als 4 x 4-Schaltmatrix, wobei in der Figur Verstärkerschalter A eingezeichnet sind, die jeweils durch einen Modulator oder einen Richtkoppler ersetzt sein können. Die Teilanordnungen, die mit einem gestrichelten Rechteck abgegrenzt sind, bilden jeweils eine 2 x 2-Schaltmatrix.

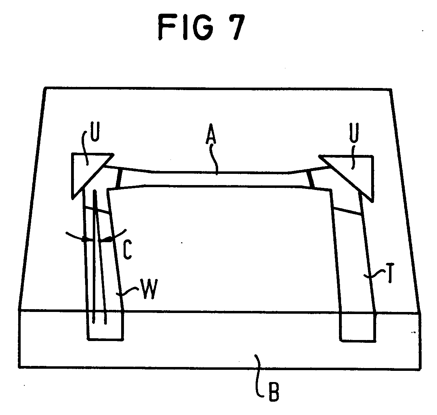

Bei dem in Figur 7 dargestellten IC ist der Bogen des Wellenleiters durch einen geraden Anteil mit einem darin enthaltenen Verstärker A und zwei Umlenkspiegel U ersetzt. Diese Umlenkspiegel U bewerkstelligen jeweils eine Richtungsänderung um näherungsweise 90°. Als Wellenleiterenden, die an der Lichtein-/austrittsfläche B münden, sind wieder zweidimensionale Taper T eingesetzt. Der Umlenkwinkel der Umlenkspiegel U kann allerdings auch von 90° abweichen, womit man eine von der Senkrechten auf die Lichtein-/austrittsfläche B um den Winkel C abweichende Richtung eines oder beider Wellenleiterenden erreicht. Alternativ ist es möglich, mehr als zwei Umlenkspiegel einzusetzen. Eine V-förmige Anordnung erhält man, indem man zwei geradlinige Abschnitte des Wellenleiters an einem Umlenkspiegel, der praktisch eine Rückreflexion der Strahlung bewirkt, enden läßt. Es ist auch möglich, zwischen zwei Bögen, die eine Richtungsänderung des Wellenleiters um 90° bewirken, einen geradlinigen Abschnitt des Wellenleiters anzuordnen. Kombinationen sind ebenfalls denkbar, zum Beispiel ein 90°-Bogen auf einer Seite und ein Umlenkspiegel für eine Richtungsänderung um 90° auf der anderen Seite. Ebenso ist für die Ausgestaltung der Entspiegelung der Lichtein-/austrittsfläche B eine Vielzahl von Möglichkeiten gegeben, von denen eine Entspiegelungsschicht besonders vorteilhaft erscheint.

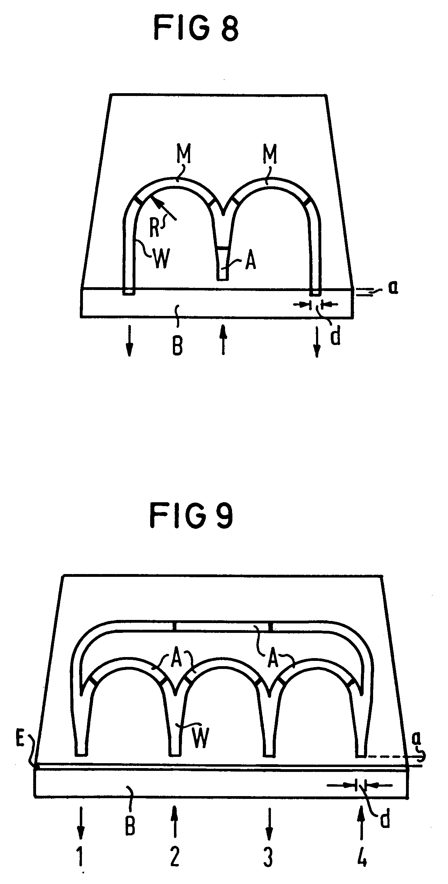

Fig. 8 zeigt eine Anordnung entsprechend Fig. 1, bei der das mittlere Wellenleiterende im Abstand a von der Lichtein-/austrittsfläche B angeordnet ist. Es ist in diesem Fall vorteilhaft, wenn ein mit Energie versorgter Bereich (in diesem Fall der Verstärker A) bis zu dem Ende dieses Wellenleiterabschnittes reicht. Die Lichtein-/austrittsfläche kann wie in Fig. 9 gezeigt mit einer Entspiegelungsschicht E bedeckt sein. In dem Beispiel der Fig. 9 enden alle Wellenleiter in einem Abstand a vor dieser Entspiegelungsschicht E. Die Wellenleiterenden sind in diesem Beispiel passive Abschnitte des Wellenleiters W. Diese Ausführungsformen bieten Vorteile im Hinblick auf die Ankopplung der Glasfasern. Entsprechend können auch bei der Ausführungsform der Fig. 7 mit Umlenkspiegeln U ein oder mehrere Wellenleiterenden im Abstand vor der Lichtein-/austrittsfläche B angeordnet sein.

## Patentansprüche

1. Optoelektronischer IC mit einer Lichtein-/austrittsfläche (B), die mit einer Entspiegelung versehen ist, mit einem Wellenleiter (W), von dem mindestens zwei Enden an diese Lichtein-/austrittsfläche (B) geführt sind und mit mindestens einem Bereich (A, M) mit einem pn-Übergang oder einem pin-Übergang in diesem Wellenleiter.

2. IC nach Anspruch 1, bei dem die Richtungsänderung des Wellenleiters (W), die erforderlich ist, um die Enden des Wellenleiters (W) zu der Lichtein-/austrittsfläche (B) zu führen, durch mindestens einen Bogen im Wellenleiter (W) mit einem Radius (R) von weniger als 1 mm bewirkt ist.

3. IC nach Anspruch 1, bei dem die Richtungsänderung des Wellenleiters (W), die erforderlich ist, um die Enden des Wellenleiters (W) zu der Lichtein-/austrittsfläche (B) zu führen, durch mindestens einen Umlenkspiegel (U) bewirkt ist.

4. IC nach einem der Ansprüche 1 bis 3, bei dem ein Subträger (F) vorhanden ist und dieser Subträger (F) grabenartige Einschnitte (V) zur Fixierung von Glasfasern (G) im Abstand der an die Lichtein-/austrittsfläche führenden Enden des Wellenleiters (W) aufweist.

5. IC nach einem der Ansprüche 1 bis 4, bei dem der Wellenleiter (W) in vergrabener Heterostruktur ausgeführt ist.

6. IC nach einem der Ansprüche 1 bis 4, bei dem der Wellenleiter (W) ein Stegwellenleiter ist.

7. IC nach einem der Ansprüche 1 bis 6, bei dem der Wellenleiter eine Quantum-well-Struktur besitzt.

8. IC nach einem der Ansprüche 1 bis 7, bei dem der Wellenleiter (W) an den in die Lichtein-/austrittsfläche führenden Enden jeweils mit einem Taper zur Verbesserung der Kopplung an die Glasfaser versehen ist.

9. IC nach einem der Ansprüche 1 bis 8, bei dem mindestens ein zu dieser Lichtein-/austrittsfläche (B) geführter Teil des Wellenleiters (W) in einem Abstand (a) von der Lichtein-/austrittsfläche (B) oder von einer auf diese Lichtein-/austrittsfläche (B) aufgebrachten Entspiegelungsschicht (E) endet.

10. IC nach einem der Ansprüche 1 bis 9, bei dem ein Bereich mit einem pn-Übergang oder einem pin-Übergang ein Verstärker (A) oder ein Modulator (M) ist.
